# EUROPEAN PATENT SPECIFICATION

(11) **EP 0 449 215 B1**
(45) Date of publication and mention of the grant of the patent: **02.01.1997**
(21) Application number: 91104786.8
(22) Date of filing: 26.03.1991
(51) Int. Cl.: B65G 65/48, B01F 15/02, B65B 1/36

(54) **Apparatus for controllably feeding a particulate material**
Gerät zum regelbaren Zuführen von partikelartigem Material
Appareil pour l'amenée réglable de matériau particulaire

(30) Priority: 27.03.1990 US 499583
(43) Date of publication of application: 02.10.1991
(73) Proprietor: GENERAL SIGNAL CORPORATION, Stamford Connecticut 06904 (US)
(72) Inventor: Latka, Henry C., Rochester, New York 14609 (US)
(74) Representative: Baillie, Iain Cameron

(56) References cited:
- EP-A- 0 170 856
- DE-C- 528 868
- GB-A- 885 146
- US-A- 2 015 164

## Description

### Field of the Invention

The present invention relates to an apparatus for controllably feeding a particulate material. The invention is particularly suitable for use in the replenishment of silicon material in a crystal growing furnace.

### Background of the Invention

Different methods and feeding devices are known in the prior art for conveying particulate material at desired feeding rates into machines for further processing. One type of such feeding device incorporates a feeding belt for conveying particulate material at either a constant or a variable feeding rate. Control of the feeding rate in this kind of feeder is accomplished by controlling the speed of the feeding belt. However, the use of belt feeders in applications requiring uniform and accurate feeding rates presents problems. Various factors affecting performance of such feeders include the influence of wear and temperature in stretching or contracting the belt. Also, flexible materials must be used for belts and this limits the available materials. There are also problems regarding the accuracy of the feed rate since it is greatly dependent on the method used in depositing the material onto the belt. Also particulate material being conveyed may spill.

Other types of known feeders employ rotary feeding drums. One such example is a feeding drum disclose in U.S. Patent 1,221,136 to Boudwin in which the feeding apparatus includes a revolvable feeding drum with a lifting vane located within the drum. Also, a structure of a rotatable feeder for conveying material to machines such as mills is disclosed in U.S. patent 1,553,613 to Holthoff.

German Patent No. 528,868 describes an inclined and rotatable drum feeder that is provided with measuring vessels along its periphery for carrying particulate material fed therein. During rotation of the drum, the material to be carried flows into measuring vessels that are open at the top and sealable toward the bottom by controllable locking means that may be selectively opened to discharge the measuring vessel contents. The preamble of claim 1 is based on this prior art.

In each of the above-mentioned rotary drum feeders, the material feeding rate is controlled by varying the rotational speed of the drum. Use of rotary drum structures has some advantages over belt feeders, including, inter alia, a greater variety of suitable materials for a rigid drum structure, and reduced criticality of mechanical adjustments than is required with belts.

In rotary drum type feeders, on the other hand, various mechanical parts are required, such as lifting vanes, spiral scopes, helical ribs, etc. for lifting and directing the particulate material from the rotary drum to the outlet means. The lifting vanes, helical ribs and other parts of the drum tend to abrade and wear and require maintenance.

There is thus a need in the art for a feeding apparatus with improved feeding accuracy, and a simpler and easier-to-maintain structure.

It is an object of the present invention to provide an apparatus for controllably feeding particulate material in which the apparatus has a simple structure and a minimum amount of mechanical parts.

It is another object of the present invention to provide a drum structure which is simple and inexpensive to manufacture and easily maintained.

It is another object of the present invention to provide a feeding apparatus which is easily operable, easily controllable and allows for a wide range of control of the feeding rate.

It is still another object to provide a structure of the feeding apparatus which provides a constant material feeding rate, reduced abrasion of the mechanical parts, and therefore, reduced wear and easy maintenance.

According to the preferred embodiment of the invention, there is provided an apparatus for controllably feeding a particulate material, including a drum mounted for rotation about an axis tilted at an acute angle with reference to a horizontal axis, said drum including a bottom wall having an inner surface, an outer periphery, a center, an annular, upstanding wall, and at least one cavity, a first portion of which is partially formed in said inner surface at the outer periphery of said bottom wall, supplying means having an outlet port for feeding said material, said supplying means being so positioned in relation to the drum that said outlet port feeds the material into the cavity during a first angular portion of drum rotation, said at least one cavity being emptied to discharge said material during a second angular portion of drum rotation, means for blocking the flow of said particulate material to said cavity when the level of said particulate material accumulated above said cavity reaches a predetermined level, and means for rotating said drum about said tilted axis at a controlled rate to thereby control the discharge rate of said material, characterized in that each said at least one cavity includes a second cavity portion extending from said first cavity portion towards the center of said bottom wall, said second cavity portion being in communication with an outlet means formed in the bottom wall of said drum, said supplying means being so positioned in relation to the drum that said outlet port pours the material into the first cavity portion when said outlet means is elevated with respect to a horizontal plane defined above the opposite end of the same cavity during said first angular position of said drum, said outlet means discharging the material by gravitational force when said outlet means is below, the filled portion of the same cavity during said second angular position of said drum.

Although the present invention apparatus may be used in many different applications requiring feeding of particulate material at a controllable, known feeding rate, it is particularly suitable for use with an apparatus for replenishment of silicon material in a crystal growing furnace.

The present invention will now be described in more detail with reference being made to one preferred embodiment shown in the accompanying drawings, wherein:
Figure 1 shows a cross-sectional view of one embodiment of a feeding apparatus according to the present invention;
Figure 2 shows a top perspective view of the rotary feeding drum of the feeding apparatus according to the present invention;
Figure 3 shows a top view taken along lines 3-3' of a rotary feeding drum of the feeding shown in Figure 1;
Figures 4A, 4B and 4C show a feeding drum at different rotational positions to illustrate its operation;
Figures 4 D, 4E and 4F illustrate the function of a circular plate;
Figure 5 shows a silicon replenishment apparatus for a crystal grower incorporating the feeding apparatus of Figure 1;
Figure 6 shows, in more detail, an injector device of the apparatus of Figure 5;
Figure 7 shows, in detail, power transmitting means between driving means and the rotary drum.

### Detailed Description of the Preferred Embodiment(s)

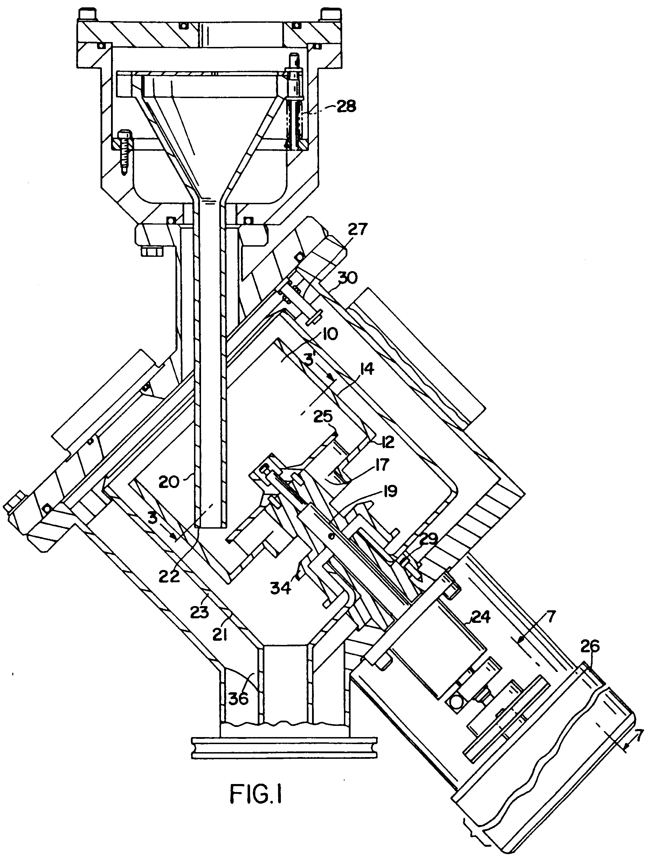

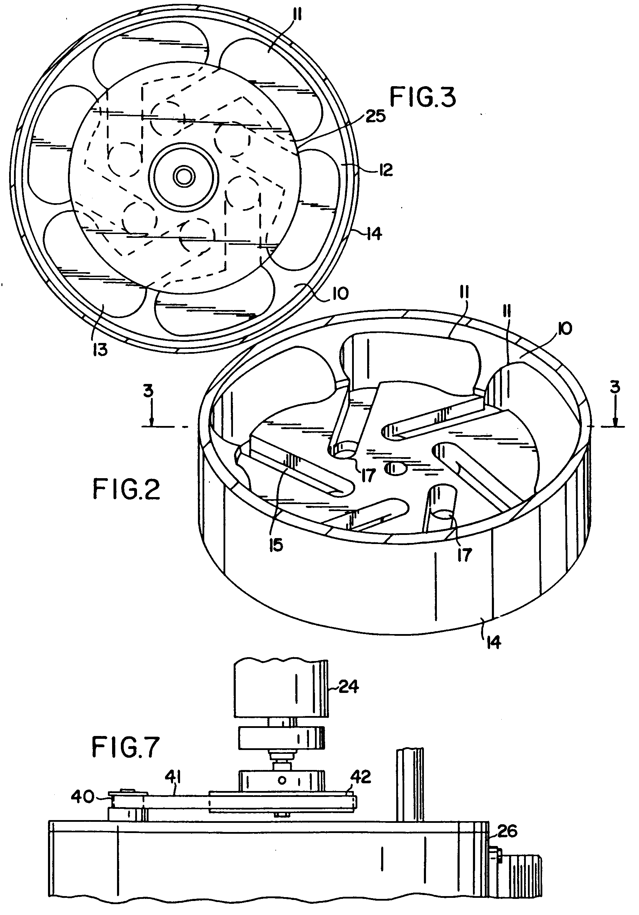

Figures 1 through 4A-F illustrate one preferred embodiment of the apparatus for controllably feeding particulate material according to the present invention. As best shown in Figure 1, the apparatus includes a drum 10 which is rotatably mounted about an axis which is inclined with reference to the horizontal. In the preferred embodiment, the angle of inclination is about 45° with reference to the horizontal A. However, different inclination angles could be selected from about 30° to about 60°. The drum 10 includes a bottom wall 12 and an upstanding side annular wall 14. In the preferred embodiment, as best shown in Figures 2 and 3, a plurality of identical cavities 11 are provided substantially in the inner surface of the bottom wall 12 of the drum 10. In the illustrated embodiment, six such cavities 11 are equally spaced about the periphery of the drum 10.

Each cavity 11 includes a first portion 13 which is partially formed in the inner surface of the side wall 14 and extends in a direction substantially coinciding with the periphery of the drum into the inner surface of the bottom wall 12 of the drum 10. A second portion 15 of each cavity 11 extends from the first portion 13 at one end towards the center of the bottom wall and is positioned generally transversely with respect to the first portion 13. The second portion 15 at the other free end communicates with aperture 17 formed in the bottom wall 12 of the drum 10. In the illustrated preferred embodiment, the first portion of the cavity has a larger volume than the second portion. In the preferred embodiment, each cavity is provided with separate outlet means for discharging the particulate material. However, instead of having a separate aperture for each cavity, a single, common outlet means can be conveniently provided in the central portion of the drum in communication with all of the cavities if the drum is supported and rotated by a means other than the centrally located means shown.

Provision of the plurality of cavities in the bottom wall of the drum for lifting and directing the particular material to the outlet means allows for smoother and more regular feeding of the material and increases the feeding rate accuracy.

The particulate material is fed to the drum through a feeding tube 20. The feeding tube is so positioned with respect to the bottom wall 12 of the drum 10 that the particulate material is fed to any cavity 11 when such cavity is at its lowermost position with respect to the horizontal and preferably is fed at the location of the above-described first portion of such cavity.

Various other lifting shapes for the cavities may be used. Also, other configurations of cavities in the bottom wall of the drum may be provided. For example, the discharge apertures in the cavities may be positioned at the portion of the cavity adjacent the periphery of the drum's bottom wall instead of adjacent the drum's center. For such configuration, the feeding tube is positioned to feed each cavity while it is substantially at its highest position with respect to the horizontal rather than at its lower position as in the disclosed embodiment and directs the material to that portion of each cavity which is generally toward the central portion of the drum and thus removed from the location of the aperture, and the material then flows by gravity to each cavity's outlet when the respective cavity is rotated toward its lower position relative to the horizontal.

The feeding apparatus is provided with means for blocking the flow of the particulate material from feeding tube 20 to the cavity being filled. This is accomplished by terminating the end 22 of the feeding tube 20 at a predetermined distance (i.e. one quarter inch or so in 2 specific embodiments) above the tops of the cavities 11 so that movement of the particulate material from the feeding tube 20 becomes blocked and interrupted by previously deposited particulate material when the level of the material over the cavity reaches a predetermined level.

Preferably, the diameter of the feeding tube 20, and all other parameters associated with the rate of material fed by the tube, are so selected that they do not constitute a limiting factor on the rate at which material is fed to the cavities. That is to say that for the maximum desired rate of feeding of the material, the feeding tube is intended to supply the material at that rate, and such rate is sufficient to fill each cavity to its maximum intended capacity at the highest expected rate of drum rotation. For lower drum rotation rates, corresponding to lower feed rates, excess supply of the material to the drum cavities is prevented by the blocking of the outlet end of the feed tube. The feed rate thus obtained is a function of substantially only the rate of drum rotation and the size and number of cavities; variables that are easy to control. This constitutes a distinct advantage over the previously mentioned belt-type feeders in which the material is fed from a feed tube onto a moving belt. In this method, the feed rate is not only dependent on belt velocity but also substantially on the distance between the belt and the end of the feed tube; a variable that, dependent on the physical character of the particulate material, can have a limited and critical useful range and can also be difficult to optimize and control under some conditions.

The drum 10 is rotatably mounted on a shaft 19 coupled through rotatably supportive and vacuum sealing means 24 to a driving means 26 for rotating the drum 10 at a preselected rotary speed. The driving means includes a variable speed electrical motor which is controlled by signals from a motor control unit 26. Figure 7 shows in greater detail power transmission means including a motor pulley 40, a drum pulley 42 and a belt 41.

The feeding apparatus further includes a funnel 23 which surrounds the drum 10. The enlarged portion 21 of the funnel 23 is coaxial with the drum, mounted about the shaft 19 and supported at the top by means 27 and at the bottom by means 29 within a housing 30. A feeding tube 20 which extends through an opening in the housing 30 and into the drum 10 has an end 22 which is horizontally and vertically, adjustably mounted. The position of its free end 22 above the cavities 11 formed in the bottom wall 12 of the drum 10 may be controlled by the operation of one or more of three equally spaced spring loaded bolts 28. The particulate material discharged from the aperture 17 in the bottom wall 12 of the rotary drum 10 falls into the funnel 23. Means 34 are provided to direct the flow of the particulate material supplied to the funnel into a discharge outlet 36 provided in communication with the part of the enlarged portion 21 of the funnel 23 which is in the lowest position with respect to the horizontal.

Also, means are provided to ensure filling of the first portion 13 of the cavities 11 with particulate material without any substantial filling of the material fed from the tube into the second portion 15 of the cavities 11. In the preferred embodiment, this is accomplished by provision of a circular plate 25 which is mounted about the shaft 19 and is dimensioned to cover at least a part of the first portion 13 and all of the second portion 15 of the cavities 11.

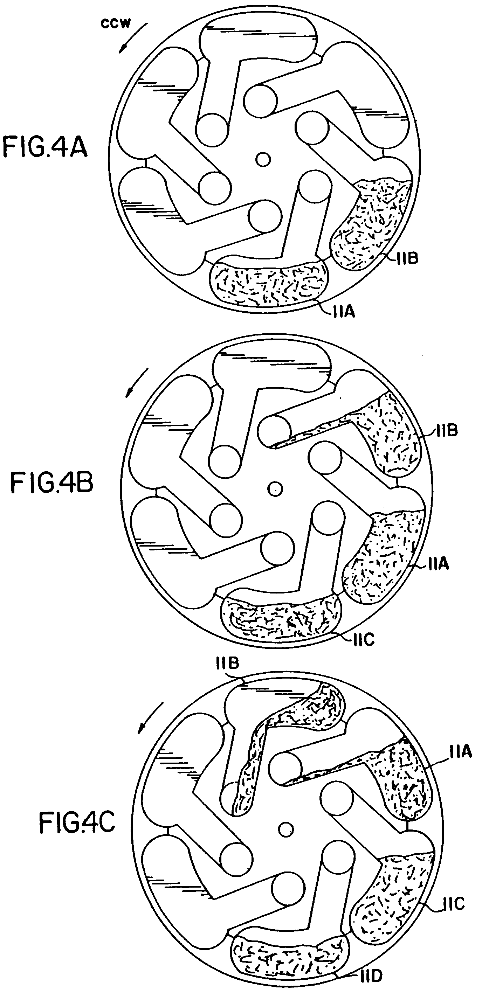

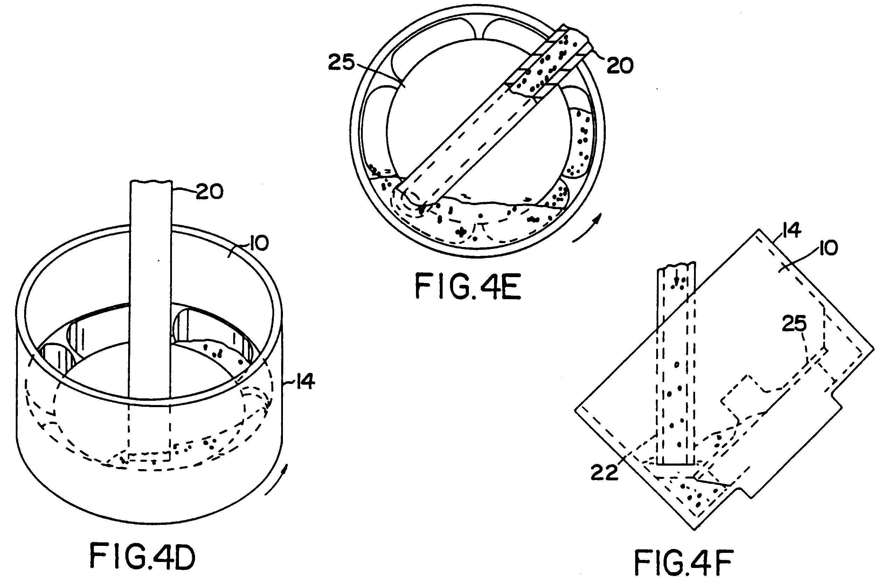

The operation of the present invention feeding apparatus is best illustrated in Figures 4A-4C which show the rotary drum in three different angular positions with reference to the horizontal A as it is rotating counterclockwise.

In Figure 4A, the cavity designated as 11A is in its lowest position with respect to the horizontal, and is being filled with the particulate material supplied from feeding tube 20 . The first portion 13 of the cavity 11A is shown as filled with the particulate material, whereas the second portion 15 is empty. The cavity designated as 11B, which is in a higher position with respect to the horizontal than 11A and is in a counterclockwise direction from cavity 11A, has its first portion 13 partially emptied of some of the particulate material which has entered into the second transverse portion 15 of the cavity 11B at this angular position of the drum.

In Figure 4B, cavity 11C is in its lowermost position with respect to the horizontal and the first portion 13 of the cavity 11C is being filled with the particulate material to the predetermined level whereas in cavity 11A, a part of the particulate material has moved from the first portion 13 into the second portion 15 of the cavity. The particulate material in cavity 11B at this angular position of the drum with respect to the horizontal begins to fall, due to gravitational forces, from the second portion 15 of the cavity 11B into and through aperture 17 at its end and is being discharged from the drum.

In Figure 4C, the particulate material in cavity 11B is almost fully discharged, whereas cavity 11D is now in its lowermost position and is fed with the particulate material supplied by the feeding tube. The feeding rate of the particulate material being discharged through the apertures communicating with each cavity is controlled substantially by the rate of rotation of the drum for a given size and shape of the cavities 11 and to the extent to which circular plate 25 covers a portion of cavities 11 and the angle to the horizontal of drum 10. Figures 4D-4F illustrate more clearly the important function of circular plate 25. The particulate material actually rides about halfway up the leading counterclockwise side of the drum and forms a continuously avalanching "hill" of material. The circular plate prevents material from this hill from falling directly into second cavity portion 15 and through aperture 17. Only material still in the cavity first portion 13 and to a lesser extent cavity second portion 15, that emerges above the top of the hill, will be transferred to drum aperture 17.

In a preferred embodiment, the repeatable feed rates are between 25g and 500g/minute. The structure of the drum and the fact that each cavity 11 completely empties during each drum revolution prevents material segregation. This basic design allows for feeding of particulate material having various sizes limited only by the dimensions and shapes of the cavities and apertures.

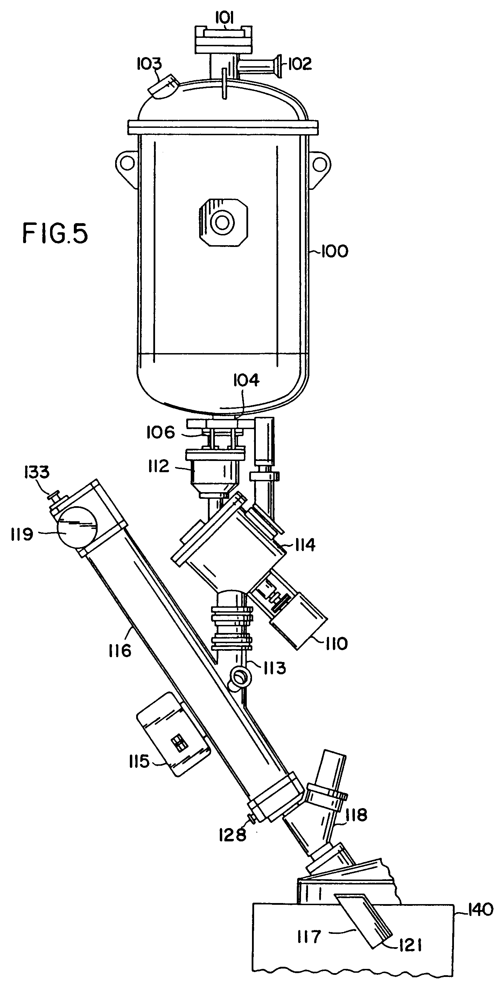

Figure 5 shows one particularly suitable application of the present invention feeding apparatus as a silicon feeder mechanism for a silicon crystal growing furnace. The silicon feeder mechanism is used to feed granular silicon material at a known and controllable rate into the crucible of a silicon crystal grower furnace for the purpose of initially charging or replenishing material used after growing a crystal. A further possible use may be to continuously feed material to the crucible while the crystal is growing. This apparatus is adapted for controllable, accurate feeding with minimal contamination of the silicon material.

In the apparatus shown in Figure 5, the silicon material is supplied into a storage container 100 through a silicon refill port 101. The storage container 100 also includes an argon/vacuum connection inlet 102 and a view port 103 for visual inspection of the silicon material content in the storage container 100. The outlet 104 of the storage container 100 is connected through a disconnecting means 106 to a feeding tube housing 112 which forms a part of the apparatus for controllable feeding 114 which has structural features disclosed above in connection with the description of Figures 1-4. Feeding tube housing 112 containing feeding tube 20 supplies silicon material to the tilled rotary drum of the apparatus 114. The feeding rate at which the silicon material is being discharged from the drum is controlled by the rate of rotation of the tilted drum by the drum driving means 110. The rate of rotation of the drum driving means 110 is selected based on the conditions in the crucible. Predetermined parameters, such as total silicon weight and melt-down rate, and real-time parameters, such as temperature and visual indications, are typical considerations. Based on this information delivered from the furnace 140 to the computer unit (not shown), appropriate feeding rates are also selected by the computer unit and output signals are sent to the input of the electronic controls of the drum driving means 110.

The tilted drum and associated feeding tube, collection funnel and motor drive have been designed to allow a predictable and controllable silicon material feed rate. The silicon feeding rate is very important in this application, since it must be matched to the furnace material meltdown rate capability. Additionally, known feeding rates are required in order to calculate the total amount of silicon material supplied to the crucible.

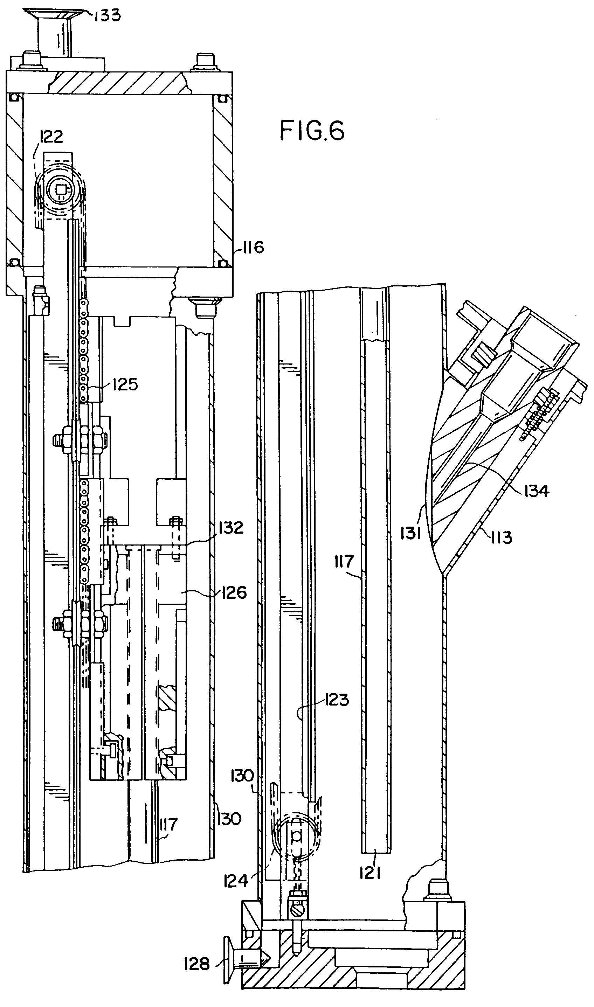

The silicon material discharged from the apparatus for controllable feeding 114 is delivered through discharge housing 113 containing discharge tube 134 at a preselected rate to injection means 116. The injection means is shown in more detail in Figure 6. Injection means 116 includes retractable injector tube 117 extendable into the furnace 140 for supplying the silicon material into the crucible. The injection means 116 includes a housing 130 into which enters a discharge end 131 of the tube 134. Inside the housing a retractable injector tube 117 is movable between an extended position in which its discharge forward end 121 is positioned inside the furnace 140 and a retracted position in which the injector tube 117 is positioned inside the housing 130. The injector tube 117 is movably supported in the housing 130 by an injector tube support 132 and drive track rail 123 means. A drive chain 125 extends between two spaced apart chain support sprockets 122, 124. Drive chain 125 follows drive track rail 123 while pulling the injector tube 117 in the injector tube support means 132. As shown in Figure 5, the injecting means 116 also includes driving means 119 for injector tube 117 and electronic controls 115 for controlling driving means 119. At the ends of the injecting means 116 argon/vacuum connection inlets 128 and 133 are provided. Also, vacuum isolation valve 118 is provided between the injecting means 116 and the furnace 140. In the preferred embodiment, the electronic controls for the injecting means 115 are designed to enable beginning of rotation of the drum by computer control only when the injector tube 117 is in a particular position with respect to discharge tube 134. In such position, the inlet 126 of the injector tube 117 for receiving silicon material from the discharge tube 134 is aligned with the outlet opening 131 in the tube 134. This electronic position interlock prevents silicon material from spilling into housing 130 due to inadvertent rate input control to motor control unit 110.

In this particular application, all materials in contact with the silicon material must be compatible with silicon handling and non-contaminating. Such materials may include tefzel for storage tank coating, teflon for delivering tubes and the drum, quartz for funnels and the feeding tube. Sizing of the various housings and the design of the internal components provides for future use of silicon as a construction material for many of the silicon handling parts.

The present invention for controllable feeding of material to a crystal growing furnace is very useful since it allows for a more accurate feeding rate, eliminates spilling of the material, and allows for use of a very simple drum structure which requires little maintenance and can be made from a variety of rigid materials.

## Claims

1. Apparatus for controllably feeding a particulate material, including a drum (10) mounted for rotation about an axis tilted at an acute angle with reference to a horizontal axis, said drum including a bottom wall (12) having an inner surface, an outer periphery, a center, an annular, upstanding wall (14), and at least one cavity (11), a first portion (13) of which is partially formed in said inner surface at the outer periphery of said bottom wall, supplying means (20) having an outlet port (22) for feeding said material, said supplying means being so positioned in relation to the drum that said outlet port feeds the material into the cavity (11) during a first angular portion of drum rotation, said at least one cavity (11) being emptied to discharge said material during a second angular portion of drum rotation, means for blocking the flow of said particulate material to said cavity when the level of said particulate material accumulated above said cavity reaches a predetermined level, and means (26, 19) for rotating said drum about said tilted axis at a controlled rate to thereby control the discharge rate of said material, characterized in that each said at least one cavity (11) includes a second cavity portion (15) extending from said first cavity portion (13) towards the center of said bottom wall, said second cavity portion being in communication with an outlet means (17) formed in the bottom wall (12) of said drum, said supplying means (20) being so positioned in relation to the drum that said outlet port (22) pours the material into the first cavity portion (13) when said outlet means (17) is elevated with respect to a horizontal plane defined above the opposite end of the same cavity (11) during said first angular position of said drum, said outlet means (17) discharging the material by gravitational force when said outlet means (17) is below the filled portion of the same cavity during said second angular position of said drum.

2. Apparatus according to claim 1, characterized in that a plurality of cavities (11) are provided substantially in the bottom wall of said drum and equally spaced along the periphery of said bottom wall, and in that each of said cavities comprises a first portion (13) extending at least substantially along the periphery of said bottom wall and a second portion (15) extending from said first portion at one end and towards the center of said bottom wall at the other end and transversely with respect to said first portion.

3. Apparatus according to claim 2, characterized in that the outlet means (17) includes a plurality of apertures, each one of said apertures being positioned at the other end of a respective second portion (15) of each of said cavities (11).

4. Apparatus according to claim 3, characterized in that the particulate material is fed only to the particular cavity which is in its lowest position with respect to the horizontal plane.

5. Apparatus according to claim 2, characterized in that a circular plate (25) is provided in the drum and is substantially adapted to cover at least a part of the first portions (13) and all of the second portions (15) of the cavities to prevent particulate material supplied from said supplying means (20) from entering into said second portions (15) of said cavities while said drum is rotating through said first angular portion of its rotation.

6. Apparatus according to any of claims 1-5, characterized in that the drum is tilted at an angle of about 45° with respect to the horizontal.

7. Apparatus according to any of claims 1-5, characterized in that the drum is tilted at an angle of between 30° and 60°.

8. Apparatus according to any of claims 1-7, characterized in that said outlet port (22) of said supplying means is positioned a predetermined distance above the cavity (11) so that the flow of said particulate material into said cavity is interrupted when the level of said particulate material in said cavity reaches a predetermined level.

9. Apparatus according to claim 2, characterized in that the first portion (13) of the cavity has a larger volume than the second portion (15).

10. Apparatus according to claim 8, characterized in that the level is approximately at the end of the supplying means (20).

## Patentansprüche

1. Vorrichtung zum regelbaren Zuführen von partikelartigem Material, mit einer Trommel (10), die drehbar um eine Achse angebracht ist, die im Verhältnis zu einer horizontalen Achse in einem spitzen Winkel geneigt ist, wobei die genannte Trommel eine untere Wand (12)umfaßt, mit einer inneren Oberfläche, einer äußeren Peripherie, einer Mitte, einer ringförmigen, aufrechten Wand (14) und mit mindestens einem Hohlraum (11), wobei ein erster Abschnitt (13) dessen teilweise in der genannten inneren Oberfläche an der äußeren Peripherie der genannten unteren Wand ausgebildet ist; mit einer Zufuhreinrichtung (20), die eine Auslaßöffnung (22) für die Zufuhr des genannten Materials aufweist, wobei die genannte Zufuhreinrichtung im Verhältnis zu der Trommel so angeordnet ist, daß die genannte Auslaßöffnung dem Hohlraum (11) das Material während einem ersten Winkelabschnitt der Trommelrotation zuführt, wobei der genannte mindestens eine Hohlraum (11) geleert wird, um das genannte Material während einem zweiten Winkelabschnitt der Trommelrotation zu entladen; mit einer Einrichtung zum Blockieren des Stroms des genannten partikelartigen Materials zu dem genannten Hohlraum, wenn das über dem genannten Hohlraum angesammelte partikelartige Material eine vorbestimmte Höhe erreicht hat; und mit einer Einrichtung (26, 19) zum Drehen der genannten Trommel um die geneigte Achse mit geregelter Geschwindigkeit, um dadurch die Entladungsgeschwindigkeit des genannten Materials zu regeln, dadurch gekennzeichnet, daß jeder dieser genannten mindestens einen Hohlräume (11) einen zweiten Hohlraumabschnitt (15) aufweist, der sich von dem genannten ersten Hohlraumabschnitt (13) zu der Mitte der genannten unteren Wand erstreckt, wobei der genannte zweite Hohlraumabschnitt eine Verbindung mit einer Auslaßeinrichtung (17) aufweist, die in der unteren Wand (12) der genannten Trommel ausgebildet ist, wobei die genannte Zufuhreinrichtung (20) im Verhältnis zu der Trommel so positioniert ist, daß die genannte Auslaßöffnung (22) das Material in den genannten ersten Hohlraumabschnitt (13) schüttet, wenn die genannte Auslaßeinrichtung (17) im Verhältnis zu einer horizontalen Ebene an der ersten Winkelstellung der genannte Trommel erhöht wird, die oberhalb des entgegengesetzten Endes des gleichen Hohlraums (11) definiert ist, wobei die genannte Auslaßeinrichtung (17) das Material durch Gravitationskraft entlädt, wenn sich die genannte Auslaßeinrichtung (17) an der genannten zweiten Winkelstellung der genannten Trommel unter dem gefüllten Abschnitt des gleichen Hohlraums befindet.

2. Vorrichtung nach Anspruch 1, dadurch gekennzeichnet, daß eine Mehrzahl von Hohlräumen (11) im wesentlichen in der unteren Wand der genannten Trommel vorgesehen ist, wobei diese entlang der Peripherie der genannten unteren Wand mit gleichmäßigen Zwischenabständen angeordnet sind, und wobei jeder der genannten Hohlräume einen ersten Abschnitt (13) aufweist, der sich zumindest im wesentlichen entlang der Peripherie der genannten unteren Wand erstreckt, sowie einen zweiten Abschnitt (15), der sich von dem genannten ersten Abschnitt an einem Ende und zu der Mitte der genannten unteren Wand an dem anderen Ende und im Verhältnis zu dem genannten ersten Abschnitt transversal erstreckt.

3. Vorrichtung nach Anspruch 2, dadurch gekennzeichnet, daß die Auslaßeinrichtung (17) eine Mehrzahl von Öffnungen aufweist, wobei jede der genannten Öffnungen an dem anderen Ende eines entsprechenden zweiten Abschnitts (15) jedes der genannten Hohlräume (11) angeordnet ist.

4. Vorrichtung nach Anspruch 3, dadurch gekennzeichnet, daß das genannte partikelartige Material nur dem bestimmten Hohlraum zugeführt wird, der sich im Verhältnis zu der horizontalen Ebene an dessen untersten Stellung befindet.

5. Vorrichtung nach Anspruch 2, dadurch gekennzeichnet, daß in der Trommel eine kreisförmige Platte (25) vorgesehen ist, und wobei diese praktisch wenigstens einen Teil der ersten Abschnitte (13) und die ganzen zweiten Abschnitte (15) der Hohlräume abdecken kann, so daß verhindert wird, daß von der genannten Zufuhreinrichtung (20) zugeführtes partikelartiges Material in die genannten zweiten Abschnitte (15) der genannten Hohlräume eintritt, während sich die Trommel in dem genannten ersten Winkelabschnitt des Drehbereichs dreht.

6. Vorrichtung nach einem der Ansprüche 1 bis 5, dadurch gekennzeichnet, daß die Trommel im Verhältnis zu der Horizontalen in einem Winkel von ungefähr 45° geneigt ist.

7. Vorrichtung nach einem der Ansprüche 1 bis 5, dadurch gekennzeichnet, daß die Trommel in einem Winkel zwischen 30° und 60° geneigt ist.

8. Vorrichtung nach einem der Ansprüche 1 bis 7, dadurch gekennzeichnet, daß die genannte Auslaßöffnung (22) der genannten Zufuhreinrichtung in einem vorbestimmten Abstand oberhalb des Hohlraums (11) positioniert ist, so daß der Fluß des genannten partikelartigen Materials in den genannten Hohlraum unterbrochen wird, wenn der Pegel des genannten partikelartigen Materials in dem genannten Hohlraum eine bestimmte Höhe erreicht hat.

9. Vorrichtung nach Anspruch 2, dadurch gekennzeichnet, daß der erste Abschnitt (13) des Hohlraums ein größeres Volumen aufweist als der zweite Abschnitt (15).

10. Vorrichtung nach Anspruch 8, dadurch gekennzeichnet, daß sich der Pegel ungefähr an dem Ende der Zufuhreinrichtung (20) befindet.

## Revendications

1. Appareil d'alimentation réglable en une matière particulaire, comprenant un tambour (10) monté afin qu'il tourne autour d'un axe incliné d'un angle aigu par rapport à un axe horizontal, le tambour ayant une paroi de fond (12) comportant une surface interne, une périphérie externe, un centre, une paroi annulaire remontante (14) et au moins une cavité (11) dont une première partie (13) est formée partiellement dans la surface interne à la périphérie externe de la paroi de fond, un dispositif (20) de transmission ayant un orifice (22) de sortie destiné à la transmission de la matière, le dispositif de transmission étant disposé par rapport au tambour de manière que l'orifice de sortie transmette la matière à la cavité (11) pour une première partie angulaire de rotation du tambour, la cavité au moins (11) étant vidée pour l'évacuation de la matière pendant une seconde partie angulaire de la rotation du tambour, un dispositif d'arrêt de la circulation de la matière particulaire vers la cavité lorsque le niveau de matière particulaire accumulée au-dessus de la cavité atteint un niveau prédéterminé, et un dispositif (26, 19) destiné à faire tourner le tambour autour de l'axe incliné à une vitesse réglée de manière que la vitesse d'évacuation de la matière soit réglée, caractérisé en ce que chaque cavité (11) comprend une seconde partie (15) de cavité partant de la première partie (13) de cavité vers le centre de la paroi inférieure, la seconde partie de cavité communiquant avec un dispositif de sortie (17) formé à la paroi de fond (12) du tambour, le dispositif de transmission (20) ayant une position par rapport au tambour telle que l'orifice de sortie (22) déverse la matière dans la première partie de cavité (13) lorsque le dispositif de sortie (17) est surélevé par rapport à un plan horizontal délimité au-dessus de l'extrémité opposée de la même cavité (11) lorsque le tambour est dans la première position angulaire, le dispositif de sortie (17) évacuant la matière sous l'action des forces de pesanteur lorsque le dispositif de sortie (17) se trouve sous la partie remplie de cette même cavité lorsque le tambour est dans la seconde position angulaire.

2. Appareil selon la revendication 1, caractérisé en ce que plusieurs cavités (11) sont disposées pratiquement dans la paroi de fond du tambour et sont régulièrement espacées à la périphérie de la paroi inférieure, et en ce que chacune des cavités comporte une première partie (13) disposée au moins pratiquement le long de la périphérie de la paroi inférieure et une seconde partie (15) partant de la première partie à une première extrémité et vers le centre de la paroi inférieure à l'autre extrémité et transversalement à la première partie.

3. Appareil selon la revendication 2, caractérisé en ce que le dispositif de sortie (17) comporte plusieurs ouvertures, chacune des ouvertures étant disposée à l'autre extrémité d'une seconde partie respective (15) de chacune des cavités (11).

4. Appareil selon la revendication 3, caractérisé en ce que la matière particulaire est transmise uniquement à la cavité particulière qui occupe la position la plus basse par rapport au plan horizontal.

5. Appareil selon la revendication 2, caractérisé en ce qu'une plaque circulaire (25) est formée dans le tambour et est destinée pratiquement à recouvrir une partie au moins des premières parties (13) et toutes les secondes parties (15) des cavités pour empêcher que la matière particulaire transmise par le dispositif de transmission (20) ne pénètre dans les secondes parties (15) des cavités lorsque le tambour tourne dans la première partie angulaire de sa rotation.

6. Appareil selon l'une quelconque des revendications 1 à 5, caractérisé en ce que le tambour est incliné d'un angle d'environ 45° par rapport à une horizontale.

7. Appareil selon l'une quelconque des revendications 1 à 5, caractérisé en ce que le tambour est incliné d'un angle compris entre 30° et 60°.

8. Appareil selon l'une quelconque des revendications 1 à 7, caractérisé en ce que l'orifice de sortie (22) du dispositif de transmission est placé à une distance prédéterminée au-dessus de la cavité (11) afin que le courant de la matière particulaire transmis à la cavité soit interrompu lorsque le niveau de la matière particulaire dans la cavité atteint un niveau prédéterminé.

9. Appareil selon la revendication 2, caractérisé en ce que la première partie (13) de la cavité a un volume supérieur à celui de la seconde partie (15).

10. Appareil selon la revendication 8, caractérisé en ce que le niveau correspond approximativement à l'extrémité du dispositif de transmission (20).
